(19) Europäisches Patentamt / European Patent Office / Office européen des brevets

(11) **EP 2 957 425 A1**

(12) **EUROPEAN PATENT APPLICATION**
published in accordance with Art. 153(4) EPC

(43) Date of publication:
**23.12.2015 Bulletin 2015/52**

(51) Int Cl.:
***B32B 27/00*** (2006.01)

(21) Application number: **14751974.8**

(22) Date of filing: **12.02.2014**

(86) International application number:
**PCT/JP2014/053223**

(87) International publication number:
**WO 2014/126115 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.02.2013 JP 2013028411**

(71) Applicant: **Lintec Corporation
Tokyo 173-0001 (JP)**

(72) Inventors:
• **IWAYA Wataru
Tokyo 173-0001 (JP)**
• **NAGANAWA Satoshi
Tokyo 173-0001 (JP)**
• **NAGAMOTO Koichi
Tokyo 173-0001 (JP)**
• **KONDO Takeshi
Tokyo 173-0001 (JP)**

(74) Representative: **Beckmann, Claus
Kraus & Weisert
Patentanwälte PartGmbB
Thomas-Wimmer-Ring 15
80539 München (DE)**

(54) **GAS BARRIER FILM LAMINATE, PRODUCTION METHOD THEREFOR, AND ELECTRONIC DEVICE**

(57) Provided is a gas barrier film laminate comprising at least two gas barrier films, the gas barrier film laminate having a structure in which two gas barrier films that are situated adjacent to each other are stacked through an adhesive layer, the adhesive layer being formed by curing an adhesive composition layer that is formed using an energy ray-curable adhesive composition by applying energy rays to the adhesive composition layer. Also provided are a method for producing the gas barrier film laminate and an electronic device comprising the gas barrier film laminate. The present invention provides: a gas barrier film laminate that exhibits an excellent moisture barrier capability, and rarely shows a deterioration in external appearance (e.g., due to occurrence of air bubbles) even when allowed to stand at a high temperature and a high humidity for a long time, a method for producing the gas barrier film laminate, and an electronic device that includes the gas barrier film laminate.

FIG. 1

EP 2 957 425 A1

**Description**

TECHNICAL FIELD

The present invention relates to a gas barrier film laminate that exhibits an excellent gas barrier capability, and has a laminate structure in which at least two gas barrier films are stacked through an adhesive layer, a method for producing the gas barrier film laminate, and an electronic device that includes the gas barrier film laminate.

BACKGROUND ART

Use of a transparent plastic film as a substrate of an electronic device (e.g., solar cell, liquid crystal display, or electroluminescence (EL) display) instead of a glass sheet (plate) has been studied in order to implement a reduction in thickness and weight and an improvement in flexibility, impact resistance, and the like.

For example, Patent Document 1 discloses a transparent film in which a transparent gas barrier layer is formed on a first transparent plastic film base, and a second transparent plastic film base is provided on the transparent gas barrier layer through a transparent adhesive layer. Patent Document 2 discloses a transparent gas barrier laminate film in which gas barrier films are bonded using an acrylic-based adhesive.

However, a laminate obtained by bonding gas barrier films through an adhesive layer has a problem in that air bubbles may be formed in the laminate when the laminate is allowed to stand at a high temperature and a high humidity for a long time.

RELATED-ART DOCUMENT

PATENT DOCUMENT

     Patent Document 1: JP-A-2006-327098
     Patent Document 2: WO04/101276

SUMMARY OF THE INVENTION

TECHNICAL PROBLEM

The invention was conceived in view of the above situation. An object of the invention is to provide a gas barrier film laminate that exhibits an excellent gas barrier capability, and rarely shows a deterioration in external appearance (e.g., due to occurrence of air bubbles) even when allowed to stand at a high temperature and a high humidity for a long time, a method for producing the gas barrier film laminate, and an electronic device that includes the gas barrier film laminate.

SOLUTION TO PROBLEM

It is considered that air bubbles are formed in the laminate since water enters the laminate through the side surface of the base used for the gas barrier film, the interface between the base and the adhesive layer, or the interface between the gas barrier layer and the base when the laminate is allowed to stand at a high temperature and a high humidity for a long time, for example. The external appearance of the laminate deteriorates when air bubbles have been formed in the laminate.

The inventors of the invention conducted extensive studies in order to develop a laminate that is produced by bonding gas barrier films through an adhesive layer, and can solve the above problem. As a result, the inventors found that a gas barrier film laminate that includes at least two gas barrier films, and is obtained by bonding two gas barrier films that are situated adjacent to each other through an adhesive composition layer that is formed using an energy ray-curable adhesive composition, and curing the adhesive composition layer by applying energy rays to the adhesive composition layer, exhibits an excellent gas barrier capability, ensures that the gas barrier films are reliably bonded and secured, and rarely shows a deterioration in external appearance (e.g., due to occurrence of air bubbles) even when allowed to stand at a high temperature and a high humidity for a long time.

Several aspects of the invention provide the following gas barrier film laminate (see (1) to (9)), method for producing a gas barrier film laminate (see (10)), and electronic device (see (11)).

(1) A gas barrier film laminate including at least two gas barrier films, the gas barrier film laminate having a structure in which two gas barrier films that are situated adjacent to each other are stacked through an adhesive layer, the adhesive layer being formed by curing an adhesive composition layer that is formed using an energy ray-curable adhesive composition by applying energy rays to the adhesive composition layer.

(2) A gas barrier film laminate including at least two gas barrier films, the gas barrier film laminate being obtained by bonding two gas barrier films that are situated adjacent to each other through an adhesive composition layer that is formed using an energy ray-curable adhesive composition, and curing the adhesive composition layer by applying energy rays to the adhesive composition layer.

(3) The gas barrier film laminate according to (1) or (2), wherein the adhesive layer has a storage modulus at 60°C of $1 \times 10^7$ to $1 \times 10^9$ Pa.

(4) The gas barrier film laminate according to (1) or (2), wherein the energy ray-curable adhesive composition includes a mixture of a polymer that does not exhibit energy ray-curability and an energy ray-curable compound as the main component, or includes a polymer that includes an energy ray-curable unsaturated group as the main component.

(5) The gas barrier film laminate according to (4), wherein the polymer that does not exhibit energy ray-curability is a (meth)acrylate-based copolymer, and the polymer that includes an energy ray-curable unsaturated group is a (meth)acrylate copolymer that includes an energy ray-curable unsaturated group in the side chain.

(6) The gas barrier film laminate according to (5), wherein the (meth)acrylate-based copolymer is a carboxyl group-containing (meth)acrylate-based copolymer.

(7) The gas barrier film laminate according to (1) or (2), wherein the gas barrier film has a water vapor transmission rate at a temperature of 40°C and a relative humidity of 90% of 0.5 $g/m^2/day$ or less.

(8) The gas barrier film laminate according to (1) or (2), wherein the gas barrier film includes a base film that is formed of a synthetic resin, and at least one gas barrier layer that is provided on the base film.

(9) The gas barrier film laminate according to (8), wherein at least one of the two gas barrier films that are situated adjacent to each other is stacked so that the base comes in contact with the adhesive layer.

(10) A method for producing the gas barrier film laminate according to any one of (1) to (9), the method including bonding two gas barrier films that are situated adjacent to each other through an adhesive composition layer that is formed using an energy ray-curable adhesive composition, and curing the adhesive composition layer by applying energy rays to the adhesive composition layer.

(11) An electronic device including the gas barrier film laminate according to any one of (1) to (9).

ADVANTAGEOUS EFFECTS OF THE INVENTION

The gas barrier film laminate according to one aspect of the invention exhibits an excellent gas barrier capability, and rarely shows a deterioration in external appearance (e.g., due to occurrence of air bubbles) even when allowed to stand at a high temperature and a high humidity for a long time.

The method for producing a gas barrier film laminate according to one aspect of the invention can easily and efficiently produce the gas barrier film according to one aspect of the invention.

The gas barrier film laminate according to one aspect of the invention may suitably be used for an electronic device (e.g., solar cell, liquid crystal display, and electroluminescence (EL) display).

BRIEF DESCRIPTION OF DRAWING

FIG. 1 is a view illustrating the layer configuration of a gas barrier film laminate according to one embodiment of the invention.

FIG. 2 is a schematic view illustrating an organic EL device that utilizes a gas barrier film laminate according to one embodiment of the invention.

A gas barrier film laminate, a method for producing a gas barrier film laminate, and an electronic device according to the exemplary embodiments of the invention are described in detail below.

1) Gas barrier film laminate

A gas barrier film laminate according to one embodiment of the invention is a gas barrier film laminate that includes at least two gas barrier films, the gas barrier film laminate having a structure in which two gas barrier films that are situated adjacent to each other are stacked through an adhesive layer, the adhesive layer being formed by curing an adhesive composition layer that is formed using an energy ray-curable adhesive composition by applying energy rays to the adhesive composition layer (laminate A), or a gas barrier film laminate that includes at least two gas barrier films, the gas barrier film laminate being obtained by bonding two gas barrier films that are situated adjacent to each other through an adhesive composition layer that is formed using an energy ray-curable adhesive composition, and curing the adhesive composition layer by applying energy rays to the adhesive composition layer (laminate B). It is preferable that the laminate A be the laminate B.

Gas barrier film

The gas barrier film used in connection with one embodiment of the invention is a film that exhibits a capability to suppress transmission (penetration) of oxygen and water vapor (hereinafter may be referred to as "gas barrier capability").

The water vapor transmission rate of the gas barrier film at a temperature of 40°C and a relative humidity of 90% is normally 1.0 $g/m^2$/day or less, preferably 0.5 $g/m^2$/day or less, and more preferably 0.1 $g/m^2$/day or less.

The lower limit of the water vapor transmission rate of the gas barrier film is not particularly limited, and is preferably as low as possible. The lower limit of the water vapor transmission rate of the gas barrier film at a temperature of 40°C and a relative humidity of 90% is normally 0.00001 $g/m^2$/day or more.

A gas barrier film laminate that exhibits an excellent gas barrier capability can be obtained by utilizing such a gas barrier film.

The water vapor transmission rate may be measured using a known gas transmission rate measurement apparatus.

The gas barrier film used in connection with one embodiment of the invention is not particularly limited as to the material, the layer configuration, and the like. It is preferable that the gas barrier film include a base film that is formed of a synthetic resin (hereinafter may be referred to as "base film" or "base"), and at least one gas barrier layer that is provided on the base film, since such a gas barrier film exhibits an excellent gas barrier capability.

The thickness of the gas barrier film is not particularly limited, but is normally 20 nm to 100 $\mu$m, and preferably 30 to 1000 nm.

Base film

The synthetic resin that is used to form the base film is not particularly limited. Examples of the synthetic resin include a polyolefin-based resin such as polyethylene and polypropylene; a styrene-based resin such as polystyrene; an acrylic-based resin such as polymethyl methacrylate; an amide-based resin such as a polyamide (e.g., nylon 6 and nylon 66), poly(m-phenyleneisophthalamide), and poly(p-phenyleneterephthalamide); a polyester-based resin such as polyethylene terephthalate, polybutylene terephthalate, polyethylene naphthalate, and polyarylate; a cycloolefin-based polymer such as a norbornene-based polymer, a monocyclic cycloolefin-based polymer, a cyclic conjugated diene-based polymer, a vinyl alicyclic hydrocarbon polymer, and hydrogenated products thereof; vinyl chloride; a polyimide; a polyamideimide; a polyphenylene ether; a polyetherketone; a polyether ether ketone; a polycarbonate; a polysulfone-based resin such as a polysulfone and a polyether sulfone; polyphenylene sulfide; a combination of two or more polymers among these polymers; and the like. The base may be a cured film obtained by curing a UV-curable resin composition that includes a UV-curable monomer that includes one or more polymerizable unsaturated bonds.

A polyester-based resin, a polysulfone-based resin, and an amide-based resin are preferable due to excellent transparency and versatility, and polyethylene terephthalate (PET), polybutylene terephthalate, a polysulfone, a polyether sulfone, and a polyamide are more preferable.

The base film may be an unstretched film, or may be a stretched film that is stretched in a uniaxial direction (e.g., a longitudinal or lateral direction) or biaxial directions.

The base film may include an additive (e.g., antioxidant, light stabilizer, plasticizer, flame retardant, UV absorber, colorant, bulking agent, pigment, and antistatic agent) as long as the object of the invention is not impaired. The base film may include an energy ray-curable compound.

The thickness of the base film is not particularly limited, but is normally 0.1 to 1,000 $\mu$m, and preferably 5 to 200 $\mu$m.

Gas barrier layer

The gas barrier layer is a layer that exhibits a gas barrier capability. The gas barrier layer may be a single layer, or may be a laminate in which a plurality of layers are stacked.

Examples of a material for forming the gas barrier layer include a metal such as aluminum, magnesium, zinc, and tin; an inorganic oxide such as silicon oxide, aluminum oxide, magnesium oxide, zinc oxide, indium oxide, and tin oxide; an inorganic nitride such as silicon nitride; an inorganic carbide; an inorganic sulfide; an inorganic oxynitride; an inorganic oxycarbide; an inorganic carbonitride; an inorganic oxycarbonitride; a polymer compound; and the like. The gas barrier layer may be a layer that is obtained by subjecting a layer that is formed using a silicon-containing polymer compound (hereinafter may be referred to as "silicon-containing polymer layer") to a plasma treatment, or may be a layer obtained by implanting ions into the silicon-containing polymer layer.

These layers may be used either alone or in combination.

The gas barrier layer is preferably an inorganic deposited film that is formed using an inorganic oxide, an inorganic nitride, or a metal as a raw material, or a layer obtained by implanting ions into the silicon-containing polymer layer, and more preferably a layer obtained by implanting ions into the silicon-containing polymer layer, since a transparent gas barrier film having a low water vapor transmission rate can be obtained.

The gas barrier layer may be formed using an arbitrary method. For example, the gas barrier layer may be formed using (i) a method that forms the gas barrier layer by depositing the above material on the base using a deposition (evaporation) method, a sputtering method, an ion plating method, a thermal CVD method, a plasma CVD method, or the like, (ii) a method that forms the gas barrier layer by applying a solution prepared by dissolving or dispersing the above material in an organic solvent to the base using a known coating method, and appropriately drying the resulting film, (iii) a method that forms the gas barrier layer by subjecting a layer formed of a silicon-containing polymer compound (hereinafter may be referred to as "silicon-containing polymer layer") to a plasma treatment, (iv) a method that forms the gas barrier layer by injecting ions into the silicon-containing polymer layer, or the like. Among these, the method (iv) is particularly preferable since a transparent gas barrier film having a low water vapor transmission rate can be easily obtained.

The silicon-containing polymer compound may be an organic compound, or may be an inorganic compound. Examples of the silicon-containing polymer compound include a polysilane-based compound such as a polyorganosiloxane-based compound, a polycarbosilane-based compound, and polydimethylsilane; a polysilazane-based compound such as perhydropolysilazane; and the like.

A product commercially available as a coating material may be used directly as the silicon-containing polymer compound.

The silicon-containing polymer layer may include an additional component other than the silicon-containing polymer compound as long as the object of the invention is not impaired. Examples of the additional component include a curing agent, an aging preventive, a light stabilizer, a flame retardant, and the like.

The content of the silicon-containing polymer compound in the silicon-containing polymer layer is preferably 50 mass% or more, and more preferably 70 mass% or more, since a gas barrier layer that exhibits a more excellent gas barrier capability can be obtained.

The thickness of the silicon-containing polymer layer is not particularly limited, but is normally 20 nm to 10 $\mu$m, preferably 30 to 500 nm, and more preferably 40 to 200 nm.

The silicon-containing polymer layer may be formed using an arbitrary method. For example, the silicon-containing polymer layer may be formed using a method that applies a silicon-containing polymer layer-forming solution that includes at least one silicon-containing polymer compound, a solvent, and the like using a known coating means (e.g., spin coater, knife coater, or gravure coater), and appropriately dries the resulting film.

The silicon-containing polymer layer-forming solution may include an additional component such as a curing agent, an additional polymer, an aging preventive, a light stabilizer, and a flame retardant as long as the object of the invention is not impaired.

It is preferable to heat and dry the resulting film in order to improve the gas barrier capability of the film. The film may be heated and dried using a known drying method such as hot-air drying, heat roll drying, or infrared irradiation.

The heating temperature is normally 80 to 150°C, and the heating time is normally several tens of seconds to several tens of minutes.

The ions that are implanted into the silicon-containing polymer layer are not particularly limited, and may be appropriately selected taking account of the desired gas barrier capability and transparency. Specific examples of the ions that are implanted into the silicon-containing polymer layer include ions of a rare gas such as argon, helium, neon, krypton, and xenon; ions of fluorocarbon, hydrogen, nitrogen, oxygen, carbon dioxide, chlorine, fluorine, and sulfur; ions of an alkane-based gas such as methane and ethane; ions of an alkene-based gas such as ethylene and propylene; ions of an alkadiene-based gas such as pentadiene; ions of an alkyne-based gas such as acetylene; ions of an aromatic hydrocarbon-based gas such as benzene; ions of a cycloalkane-based gas such as cyclopropane; ions of a cycloalkene-based gas such as cyclopentene; ions of a conductive metal such as gold; ions of an organosilicon compound such as tetramethoxysilane; and the like.

These ions may be used either alone or in combination.

It is preferable to use ions of at least one element selected from the group consisting of hydrogen, nitrogen, oxygen, argon, helium, neon, xenon, and krypton from the viewpoint of ease of implantation and a capability to form a gas barrier layer that exhibits a particularly excellent gas barrier capability.

The ions may be implanted using an arbitrary method. Examples of the ion implantation method include a method that applies ion beams, a method that implants ions present in plasma (plasma ion implantation method), and the like. It is preferable to use the plasma ion implantation method since a gas barrier film can be easily obtained.

The plasma ion implantation method is not particularly limited. Examples of the plasma ion implantation method include (A) a method that implants ions present in plasma generated by utilizing an external electric field into the surface area of the silicon-containing polymer layer, (B) a method that implants ions present in plasma generated by an electric field produced by applying a negative high-voltage pulse to the silicon-containing polymer layer into the surface area of the silicon-containing polymer layer, and the like.

When using the method (A), it is preferable to set the ion implantation pressure to 0.01 to 1 Pa. When the ion implantation pressure is within the above range, the ions can be easily, efficiently, and uniformly implanted, and the desired gas barrier layer can be efficiently formed.

The method (B) has advantages in that it is unnecessary to increase the degree of decompression, the operation is simple, and the treatment time can be significantly reduced. Moreover, the entire silicon-containing polymer layer can be uniformly treated, and the ions present in the plasma can be continuously implanted into the surface area of the silicon-containing polymer layer with high energy by applying a negative high-voltage pulse.

The method (B) has a further advantage in that an excellent ion-implanted layer can be uniformly formed in the surface area of the silicon-containing polymer layer by merely applying a negative high-voltage pulse to the polymer layer without requiring a special means such as a high-frequency power supply (e.g., radio frequency (RF) power supply or microwave power supply), and the productivity is improved. Therefore, the method (B) is preferable as compared with the method (A).

When implementing the method (A) or (B), the pulse width when applying a negative high-voltage pulse is preferably set to 1 to 15 $\mu$sec. When the pulse width is within the above range, the ions can be easily, efficiently, and uniformly implanted.

The voltage applied when generating plasma is preferably set to -1 to -50 kV, more preferably -1 to -30 kV, and particularly preferably -5 to -20 kV. If the applied voltage is higher than -1 kV, the ion implantation dose may be insufficient, and the desired performance may not be obtained. If the applied voltage is lower than -50 kV, the film may be charged during ion implantation, or the film may be colored, for example.

An ion implantation apparatus that is used when implanting the ions present in the plasma into the silicon-containing polymer layer is not particularly limited. A known plasma ion implantation apparatus may be used.

The thickness of the ion implantation target area may be controlled by adjusting the implantation conditions (e.g., type of ions, applied voltage, and implantation time), and may be determined taking account of the thickness of the silicon-containing polymer layer, the intended use of the laminate, and the like. The thickness of the ion implantation target area is normally 5 to 400 nm, and preferably 10 to 200 nm.

Adhesive layer

The adhesive layer included in the laminate according to one embodiment of the invention is formed by curing the adhesive composition layer that is formed using the energy ray-curable adhesive composition (described below) by applying energy rays to the adhesive composition layer. Examples of the energy rays include ultraviolet rays, electron beams, and the like.

The adhesive layer included in the laminate according to one embodiment of the invention reliably bonds and secures the gas barrier films even at a high temperature and a high humidity, and effectively suppresses a situation in which air bubbles and the like are formed in the gas barrier film laminate. Therefore, the laminate (gas barrier film laminate) according to one embodiment of the invention rarely shows a deterioration in external appearance.

The energy ray-curable adhesive composition is not particularly limited as long as the energy ray-curable adhesive composition is cured due to application of the energy rays to form an adhesive layer that can bond the gas barrier films. It is preferable that the energy ray-curable adhesive composition be (A) an energy ray-curable adhesive composition that includes a mixture of a polymer (x) that does not exhibit energy ray-curability and an energy ray-curable compound (y) as the main component, or (B) an energy ray-curable adhesive composition that includes a polymer (z) that includes an energy ray-curable unsaturated group as the main component, since the object of the invention can be easily achieved.

It is possible to obtain a sufficient film-forming capability, and improve the flexibility of the resulting gas barrier laminate by utilizing the energy ray-curable adhesive composition that includes the polymer (x) that does not exhibit energy ray-curability, the polymer (z) that includes an energy ray-curable unsaturated group, or the like as a polymer component.

Energy ray-curable adhesive composition (A)

Examples of the polymer (x) (that does not exhibit energy ray-curability) that is used for the energy ray-curable adhesive composition (A) include a (meth)acrylate-based (co)polymer, natural rubber, a modified natural rubber, a silicone resin, and the like. These polymers may be used either alone or in combination.

It is preferable to use a (meth)acrylate-based (co)polymer since the object of the invention can be more easily achieved. Note that the term "(meth)acrylic acid" used herein refers to acrylic acid or methacrylic acid, and the term "(co)polymer" used herein refers to a homopolymer or a copolymer.

The (meth)acrylate-based (co)polymer is a polymer that is obtained by polymerizing a (meth)acrylate monomer.

Examples of the (meth)acrylate include an alkyl (meth)acrylate in which the number of carbon atoms of the alkyl group is 1 to 20, such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, myristyl (meth)acrylate, palmityl (meth)acrylate, stearyl (meth)acrylate, and the like. These (meth)acrylates may be used either alone or in combination.

The content of a repeating unit derived from the (meth)acrylate monomer in the (meth)acrylate-based (co)polymer is 50 to 97 mass%, and preferably 60 to 98 mass%, and particularly preferably 70 to 95 mass%, based on the total repeating units.

The (meth)acrylate-based (co)polymer may be a copolymer of the (meth)acrylate and a monomer that includes a functional group (e.g., hydroxyl group, carboxyl group, amino group, or epoxy group) (hereinafter may be referred to as "functional group-containing monomer") (hereinafter may be referred to as "functional group-containing (meth)acrylate-based copolymer").

Examples of the functional group-containing monomer include a hydroxyalkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; a monoalkylaminoalkyl (meth)acrylate such as monomethylaminoethyl (meth)acrylate, monoethylaminoethyl (meth)acrylate, monomethylaminopropyl (meth)acrylate, and monoethylaminopropyl (meth)acrylate; an ethylenically unsaturated carboxylic acid such as acrylic acid, methacrylic acid, crotonic acid, maleic acid, itaconic acid, and citraconic acid; and the like. These functional group-containing monomers may be used either alone or in combination.

The content of a repeating unit derived from the functional group-containing monomer in the functional group-containing (meth)acrylate-based copolymer is normally 0.1 to 100 mass% based on the total repeating units. The content of a repeating unit derived from the functional group-containing monomer in the functional group-containing (meth)acrylate-based copolymer is preferably 1 to 40 mass%, and particularly preferably 3 to 30 mass%, since an adhesive layer that exhibits better adhesion and durability can be obtained.

A (meth)acrylate-based copolymer that includes a carboxyl group as the functional group (carboxyl group-containing (meth)acrylate-based copolymer) is particularly preferable as the (meth)acrylate-based copolymer due to high adhesion to the gas barrier film and a capability to more effectively suppress the ccurrence of air bubbles.

It is preferable to use a crosslinking agent when using the functional group-containing (meth)acrylate-based copolymer.

A polyfunctional compound that exhibits reactivity with the functional group included in the functional group-containing monomer may be used as the crosslinking agent. Examples of the crosslinking agent include an isocyanate-based crosslinking agent such as tolylene diisocyanate, hexamethylene diisocyanate, trimethylolpropanetolylene diisocyanate, and adducts thereof; an epoxy-based crosslinking agent such as ethylene glycol glycidyl ether; an aziridine-based crosslinking agent such as hexa[1-(2-methyl)-aziridinyl]triphosphatriazine; a chelate-based crosslinking agent such as an aluminum chelate; and the like.

These crosslinking agents may be used either alone or in combination.

The crosslinking agent is normally used in an amount of 0.01 to 10 parts by mass, and preferably 0.05 to 5 parts by mass, based on 100 parts by mass of the functional group-containing (meth)acrylate-based copolymer.

The (meth)acrylate-based (co)polymer may be a copolymer that is produced by copolymerizing an additional monomer such as vinyl formate, vinyl acetate, or styrene with the above monomer(s).

The content of a repeating unit derived from the additional monomer in the (meth)acrylate-based (co)polymer is preferably 0.01 to 10 mass%, and more preferably 0.05 to 7.0 mass%, based on the total repeating units.

The (meth)acrylate-based (co)polymer may be produced using a known polymerization method such as a solution polymerization method, an emulsion polymerization method, or a suspension polymerization method.

The mass average molecular weight (Mw) of the (meth)acrylate-based (co)polymer is preferably 100,000 to 3,000,000, more preferably 300,000 to 2,500,000, and still more preferably 500,000 to 2,000,000. When the mass average molecular weight of the (meth)acrylate-based (co)polymer is within the above range, it is possible to obtain a sufficient film-forming capability, and improve the flexibility of the resulting gas barrier laminate.

Note that the mass average molecular weight (Mw) of the (meth)acrylate-based (co)polymer refers to a standard polystyrene-equivalent value determined by gel permeation chromatography (GPC).

The energy ray-curable adhesive composition (A) includes the energy ray-curable compound (y) together with the polymer (x) that does not exhibit energy ray-curability.

The energy ray-curable compound (y) undergoes a reaction when the energy rays have been applied to form a three-dimensional network structure. The polymer (x) that does not exhibit energy ray-curability (e.g., (meth)acrylate-based copolymer) is secured (fixed) within the three-dimensional network structure while maintaining a certain degree of freedom so that an increase in cohesive strength occurs, a high storage modulus is obtained even at a high temperature, and the desired storage modulus is achieved. Therefore, it is possible to easily obtain an adhesive layer that effectively suppresses the occurrence of air bubbles.

The energy ray-curable compound (y) is not particularly limited. It is preferable to use an energy ray-curable polyfunctional monomer and/or oligomer as the energy ray-curable compound (y) since the object of the invention can be more easily achieved.

Examples of a preferable energy ray-curable polyfunctional monomer include a polyfunctional (meth)acrylate-based monomer having a molecular weight of less than 1,000.

Examples of the polyfunctional (meth)acrylate-based monomer include a bifunctional (meth)acrylate-based monomer such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, hydroxypivalic acid neopentyl glycol di(meth)acrylate, dicyclopentanyl di(meth)acrylate, caprolactone-modified dicyclopentenyl di(meth)acrylate, ethylene oxide-modified phosphoric acid di(meth)acrylate, di(acryloyloxyethyl)isocyanurate, and allylated cyclohexyl di(meth)acrylate; a trifunctional (meth)acrylate-based monomer such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, and tris(acryloyloxyethyl)isocyanurate; a tetrafunctional (meth)acrylate-based monomer such as diglycerol tetra(meth)acrylate and pentaerythritol tetra(meth)acrylate; a pentafunctional (meth)acrylate-based monomer such as propionic acid-modified dipentaerythritol penta(meth)acrylate; a hexafunctional (meth)acrylate-based monomer such as dipentaerythritol hexa(meth)acrylate and caprolactone-modified dipentaerythritol hexa(meth)acrylate; and the like.

These polyfunctional (meth)acrylate-based monomers may be used either alone or in combination.

Examples of the energy ray-curable polyfunctional oligomer include a prepolymer such as a polyester acrylate-based oligomer, an epoxy acrylate-based oligomer, a urethane acrylate-based oligomer, a polyether acrylate-based oligomer, a polybutadiene acrylate-based oligomer, and a silicone acrylate-based oligomer.

The mass average molecular weight (Mw) of the energy ray-curable polyfunctional oligomer is preferably 50,000 or less, more preferably 500 to 50,000, and still more preferably 3,000 to 40,000.

The content of the energy ray-curable compound (y) in the energy ray-curable adhesive composition (A) is preferably 1 to 70 mass%, more preferably 3 to 60 mass%, still more preferably 5 to 40 mass%, and particularly preferably 20 to 35 mass%, based on the total amount of the polymer (x) that does not exhibit energy ray-curability and the energy ray-curable compound (y).

If the content of the energy ray-curable compound (y) exceeds 70 mass%, the volume shrinkage ratio during curing may increase, and interfacial delamination between the adhesive layer and the gas barrier film may occur. If the content of the energy ray-curable compound (y) is less than 1 mass%, the desired storage modulus may not be obtained, and it may be difficult to suppress the occurrence of air bubbles.

Energy ray-curable adhesive composition (B)

Examples of the polymer (z) (that includes an energy ray-curable unsaturated group) that is used for the energy ray-curable adhesive composition (B) is not particularly limited as long as the unsaturated group included in the polymer (z) undergoes a reaction when the energy rays have been applied, and the polymer (z) is cured. It is preferable to use a (meth)acrylate copolymer that includes an energy ray-curable unsaturated group in the side chain as the polymer (z) since the object of the invention can be more easily achieved. Since the polymer (z) undergoes a reaction and is cured when the energy rays have been applied, an increase in cohesive strength occurs, a high storage modulus is obtained even at a high temperature, and the desired storage modulus is achieved. Therefore, it is possible to easily obtain an adhesive layer that effectively suppresses the occurrence of air bubbles.

The (meth)acrylate copolymer that includes an energy ray-curable unsaturated group in the side chain may be obtained by reacting an energy ray-curable unsaturated group-containing compound that includes a substituent that reacts with the functional group included in the functional group-containing (meth)acrylate-based copolymer with the functional group-containing (meth)acrylate-based copolymer.

The substituent included in the energy ray-curable unsaturated group-containing compound may be appropriately selected taking account of the type of the functional group included in the functional group-containing (meth)acrylate-based copolymer.

Examples of the substituent include an isocyanate group, an aziridinyl group, an epoxy group, an oxazoline group, an amino group, and an aziridinyl group. Each molecule of the (meth)acryloyl group-containing compound includes at least one substituent.

Each molecule of the energy ray-curable unsaturated group-containing compound includes 1 to 5 (preferably 1 or 2) carbon-carbon double bonds that undergo polymerization when the energy rays have been applied.

Examples of the energy ray-curable unsaturated group-containing compound include 2-methacryloyloxyethyl isocyanate; meta-isopropenyl-$\alpha,\alpha$-dimethylbenzyl isocyanate; methacryloyl isocyanate; allyl isocyanate; an acryloyl monoisocyanate compound obtained by reacting a diisocyanate or polyisocyanate compound with hydroxyethyl (meth)acrylate; an acryloyl monoisocyanate compound obtained by reacting a diisocyanate or polyisocyanate compound, a polyol compound, and hydroxyethyl (meth)acrylate; glycidyl (meth)acrylate; (meth)acrylic acid; 2-(1-aziridinyl)ethyl (meth)acrylate; 2-vinyl-2-oxazoline; 2-isopropenyl-2-oxazoline; and the like.

The average side-chain energy ray-curable unsaturated group content in the (meth)acrylate copolymer that includes an energy ray-curable unsaturated group in the side chain is preferably 0.1 to 50 mol%, and particularly preferably 5 to 30 mol%.

If the average side-chain energy ray-curable unsaturated group content is less than 0.1 mol%, the desired storage modulus may not be obtained, and it may be difficult to suppress the occurrence of air bubbles. If the average side-chain energy ray-curable unsaturated group content exceeds 50 mol%, the volume shrinkage ratio during curing may increase, and interfacial delamination between the adhesive layer and the gas barrier film may occur.

Note that the average side-chain energy ray-curable unsaturated group content is calculated by the following expression.

$$\text{Average side-chain energy ray-curable unsaturated group content} = (\text{number of moles of}$$
$$\text{energy ray-curability unsaturated group} / \text{total number of moles of monomer included in}$$
$$\text{acrylic-based copolymer}) \times 100$$

The mass average molecular weight (Mw) of the (meth)acrylate copolymer that includes an energy ray-curable unsaturated group in the side chain is not particularly limited, but is preferably 100,000 to 3,000,000, more preferably 300,000 to 2,500,000, and still more preferably 500,000 to 2,000,000. When the mass average molecular weight of the (meth)acrylate copolymer is within the above range, it is possible to obtain a sufficient film-forming capability, and improve the flexibility of the resulting gas barrier laminate.

These polymers (z) (that include an energy ray-curable unsaturated group) may be used either alone or in combination.

The content of the polymer (z) (that includes an energy ray-curable unsaturated group) in the energy ray-curable adhesive composition (B) is preferably 50 to 100 mass%, more preferably 55 to 98 mass%, and still more preferably 65 to 95 mass%.

When the content of the polymer (z) (that includes an energy ray-curable unsaturated group) is within the above range, it is possible to suppress the occurrence of air bubbles, and obtain the desired storage modulus.

The energy ray-curable adhesive composition (B) may appropriately include the polymer (x) that does not exhibit energy ray-curability and the energy ray-curable compound (y).

The energy ray-curable adhesive composition (A) and the energy ray-curable adhesive composition (B) used in connection with one embodiment of the invention may optionally include a photoinitiator.

Examples of the photoinitiator include benzoin, benzoin methyl ether, benzoin ethyl ether, benzoin isopropyl ether, benzoin n-butyl ether, benzoin isobutyl ether, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexyl phenyl ketone, 2-methyl-1-[4-(methylthio)phenyl]-2-morpholinopropan-1-one, 4-(2-hydroxyethoxy)phenyl 2-(hydroxyl-2-propyl) ketone, benzophenone, p-phenylbenzophenone, 4,4'-diethylaminobenzophenone, dichlorobenzophenone, 2-methylanthraquinone, 2-ethylanthraquinone, 2-t-butylanthraquinone, 2-aminoanthraquinone, 2-methylthioxanthone, 2-ethylthioxanethone, 2-chlorothioxanthone, 2,4-dimethylthioxanethone, 2,4-diethylthioxanthone, benzyl dimethyl ketal, acetophenone dimethyl ketal, p-dimethylaminobenzoates, oligo[2-hydroxy-2-methyl-1[4-(1-methylvinyl)phenyl]propanone], 2,4,6-trimethylbenzoyldiphenylphosphine oxide, and the like. These photoinitiators may be used either alone or in combination.

The photoinitiator is normally used in an amount of 0.2 to 20 parts by mass based on 100 parts by mass of the energy ray-curable compound (y) or the polymer (z) (that includes an energy ray-curable unsaturated group).

The energy ray-curable adhesive composition used in connection with one embodiment of the invention may include an alkoxy metal compound (e.g., silane coupling agent) in order to improve adhesion to the gas barrier film.

Examples of the silane coupling agent include methyltrimethoxysilane, methyltriethoxysilane, methyltripropoxysilane, methyltriacetoxysilane, methyltributoxysilane, ethyltrimethoxysilane, ethyltriethoxysilane, vinyltrimethoxysilane, vinyltriethoxysilane, vinyltriacetoxysilane, vinyltrimethoxyethoxysilane, phenyltrimethoxysilane, phenyltriethoxysilane, phenyltriacetoxysilane, dimethyldimethoxysilane, phenylmethyldimethoxysilane, dimethyldiethoxysilane, phenylmethyldiethoxysilane, and the like.

The content of the alkoxy metal compound in the composition is preferably 0.001 to 10 mass%, and more preferably 0.005 to 5 mass%.

The energy ray-curable adhesive composition used in connection with one embodiment of the invention may include an additional additive.

Examples of the additional additive include a light stabilizer, an antioxidant, a tackifier, a plasticizer, a UV absorber, a coloring agent, a resin stabilizer, a filler, a pigment, an extender, an antistatic agent, a coupling agent, and the like. The total content of the additive in the energy ray-curable adhesive composition is not particularly limited as long as the object of the invention is not impaired. The total content of the additive in the energy ray-curable adhesive composition is normally 0.001 to 50 mass%.

The energy ray-curable adhesive composition may appropriately include a solvent so that the energy ray-curable adhesive composition has the desired solid content, or exhibits the desired applicability.

Examples of the solvent include toluene, ethyl acetate, methyl ethyl ketone, and the like.

The solid content in the energy ray-curable adhesive composition is preferably 5 to 40%, and more preferably 10 to 30%.

The energy ray-curable adhesive composition may be prepared by appropriately mixing and stirring the components in the desired ratio using a known method.

The adhesive composition layer may be formed by an arbitrary method using the resulting energy ray-curable adhesive composition. For example, the energy ray-curable adhesive composition is applied to a resin film (release sheet) that has been subjected to a release treatment, and the resulting film is appropriately dried to form the adhesive composition layer.

A known release sheet may be used as the release sheet. Examples of the release sheet include a release sheet produced by subjecting a resin film (e.g., polyethylene terephthalate or polypropylene) to a release treatment using a silicone-based release agent or the like.

The energy ray-curable adhesive composition may be applied to the release sheet using an arbitrary method. For example, the energy ray-curable adhesive composition may be applied to the release sheet using a known coating method such as a comma direct coating method, a spin coating method, a knife coating method, or a gravure coating method.

The adhesive composition layer can be formed by drying the resulting film.

The film may be dried using a known drying method such as hot-air drying, heat roll drying, or infrared irradiation. The heating temperature is normally about 60 to 100°C, and the heating time is normally several tens of seconds to several tens of minutes.

The storage modulus at 23°C of the uncured adhesive composition layer is normally $1\times10^3$ to $5\times10^6$ Pa, and preferably $1\times10^4$ to $5\times10^5$ Pa. When the storage modulus of the adhesive composition layer is within the above range, the adhesive composition layer sufficiently adheres to the gas barrier film.

The adhesive layer is formed by bonding the adhesive composition layer to the gas barrier film, and applying the energy rays to the adhesive composition layer (as described later). Since the resulting adhesive layer has a high storage modulus at a high temperature, it is possible to reliably bond and secure the gas barrier films, and effectively suppress a situation in which air bubbles and the like are formed in the gas barrier film laminate even when the gas barrier film laminate is allowed to stand at a high temperature and a high humidity for a long time. Specifically, it is possible to obtain a gas barrier film laminate that rarely shows a deterioration in external appearance.

The storage modulus at 60°C of the resulting adhesive layer is not particularly limited, but is preferably $1\times10^7$ to $1\times10^9$ Pa, more preferably $1\times10^7$ to $9\times10^8$ Pa, and particularly preferably $2\times10^7$ to $5\times10^8$ Pa. If the storage modulus at 60°C of the adhesive layer is less than $1\times10^7$ Pa, air bubbles may be easily formed in the gas barrier film laminate when the gas barrier film laminate is allowed to stand at a high temperature and a high humidity for a long time. If the storage modulus at 60°C of the adhesive layer exceeds $1\times10^9$ Pa, the bendability of the gas barrier film laminate may deteriorate.

The storage modulus at 23°C of the adhesive layer is not particularly limited, but is preferably $1\times10^7$ to $5\times10^9$ Pa, more preferably $2\times10^7$ to $1\times10^9$ Pa, and particularly preferably $5\times10^7$ to $5\times10^8$ Pa. If the storage modulus at 23°C of the adhesive layer is less than $1\times10^7$ Pa, the desired modulus of elasticity may not be obtained when the gas barrier film laminate is allowed to stand at a high temperature and a high humidity for a long time. If the storage modulus at 23°C of the adhesive layer exceeds $5\times10^9$ Pa, the bendability of the gas barrier film laminate may deteriorate.

The thickness of the adhesive layer is normally 0.1 to 1,000 $\mu$m, preferably 0.5 to 500 $\mu$m, more preferably 1

to 100 μm, and still more preferably 1 to 10 μm.

Since the adhesive layer exhibits a high gas barrier capability as compared with an adhesive layer that is formed using a non-energy ray-curable adhesive composition, it is possible to suppress a situation in which water enters the gas barrier film laminate through the side surface of the adhesive layer when the gas barrier film laminate is allowed to stand at a high temperature and a high humidity for a long time. The water vapor transmission rate of the adhesive layer at a temperature of 40°C and a relative humidity of 90% is normally 10 to 1,000 $g/m^2/day$, and preferably 50 to 800 $g/m^2/day$. The water vapor transmission rate of the adhesive layer may be measured using a known gas transmission rate measurement apparatus.

The gas barrier film laminate according to one embodiment of the invention includes at least two gas barrier films, and has a structure in which two gas barrier films that are situated adjacent to each other are stacked through the adhesive layer.

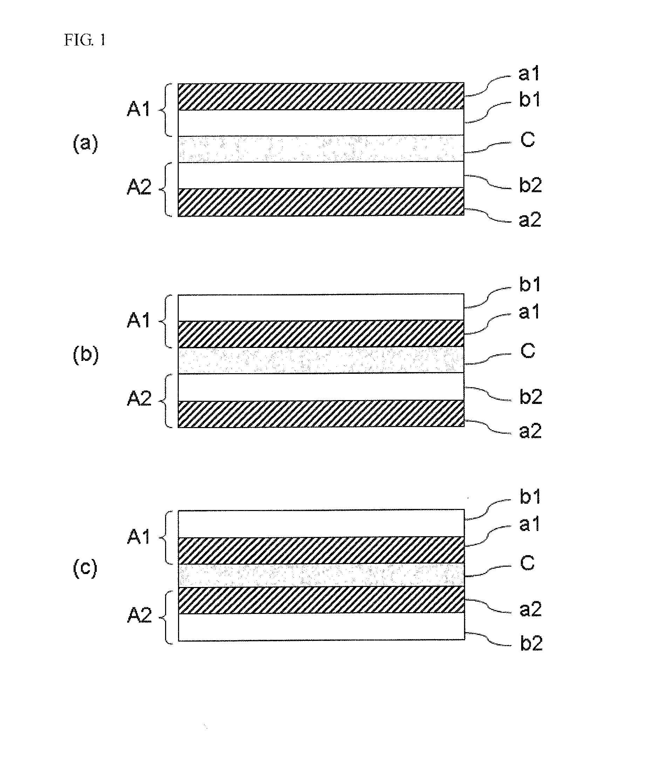

FIG. 1 illustrates examples of the gas barrier film laminate according to one embodiment of the invention. In FIG. 1, reference signs (symbols) A1 and A2 indicate the gas barrier film, reference sign C indicates the adhesive layer, reference signs a1 and a2 indicate the base, and reference signs b1 and b2 indicate the gas barrier layer.

FIG. 1 illustrates the gas barrier film laminates respectively having the following configurations (a) to (c).

(a) (base/gas barrier layer)/adhesive layer/(gas barrier layer/base)
(b) (gas barrier layer/base)/adhesive layer/(gas barrier layer/base)
(c) (gas barrier layer/base)/adhesive layer/(base/gas barrier layer)

It is possible to effectively suppress the occurrence of air bubbles when at least one of the gas barrier films is stacked so that the base comes in contact with the adhesive layer ((b) and (c)). It is possible to most effectively suppress the occurrence of air bubbles when each of the gas barrier films is stacked so that the base comes in contact with the adhesive layer ((c)).

This is because water included in the base is easily removed from the side opposite to the gas barrier layer, and water easily enters the base through the side surface when the gas barrier film laminate is allowed to stand at a high temperature and a high humidity for a long time. Therefore, it is possible to suppress a situation in which air bubbles are formed in the gas barrier film laminate by employing the configuration (b) or (c) as compared with the case of employing the configuration (a). It is possible to significantly suppress the occurrence of air bubbles by employing the configuration (b) or (c) in combination with the above adhesive layer.

The gas barrier film laminate according to one embodiment of the invention may have a structure in which a plurality of layer configurations among the above layer configurations are combined corresponding to the intended use.

The gas barrier film laminate according to one embodiment of the invention may include an additional layer (e.g., protective layer and conductive layer) in addition to the gas barrier film and the adhesive layer.

It is preferable that the protective layer have high transparency and excellent scratch resistance. The protective layer may have a stain-proof function, a fingerprint-proof function, an antistatic function, water repellency, hydrophilicity, and the like.

The thickness of the protective layer may be appropriately selected taking account of the intended use of the gas barrier film laminate, and the like. The thickness of the protective layer is normally 0.05 to 10 μm, preferably 0.1 to 8.0 μm, more preferably 0.2 to 5.0 μm, and still more preferably 0.2 to 1.0 μm.

A material for forming the protective layer is not particularly limited. The protective layer may be formed using a known material. Examples of the material for forming the protective layer include a silicon-containing compound; a polymerizable composition that includes a photopolymerizable compound that includes a photopolymerizable monomer and/or a photopolymerizable prepolymer, and an initiator that generates radicals at least due to light in the visible region; a resin such as a polyester-based resin, a polyurethane-based resin (particularly a two-component curable resin that includes an isocyanate compound and a polyacrylic polyol, a polyester polyol, a polyether polyol, or the like), an acrylic-based resin, a polycarbonate-based resin,
a vinyl chloride/vinyl acetate copolymer, a polyvinyl butyral-based resin, and a nitrocellulose-based resin; an alkyl titanate; ethyleneimine; and the like. These materials may be used either alone or in combination.

A polymerizable composition that includes a photopolymerizable compound that includes a photopolymerizable monomer and/or a photopolymerizable prepolymer, and an initiator that generates radicals at least due to light in the visible region, is preferable as the material for forming the protective layer, since excellent transparency and scratch resistance can be achieved.

The conductive layer is provided when the gas barrier film laminate is used as an electrode, or when it is desired to provide the gas barrier film laminate with antistatic performance and a heat radiation capability.

A material for forming the conductive layer is not particularly limited. The conductive layer may be formed using a known material. Examples of the material for forming the conductive layer include a metal, an alloy, a metal oxide, an electrically conductive compound, a mixture thereof, and the like. Specific examples of the material for forming the conductive layer include antimony-doped tin oxide (ATO); fluorine-doped tin oxide (FTO); a metal oxide such as tin oxide, zinc oxide, indium oxide, indium tin oxide (ITO), and indium zinc oxide (IZO); a metal such as gold, silver, chromium, and nickel; a mixture thereof; an inorganic conductive material such as copper iodide and copper sulfide; an organic conductive material such as polyaniline, polythiophene, and polypyrrole; and the like.

The conductive layer may optionally be patterned. The conductive layer may be patterned by chemical etching (e.g., photolithography), physical etching that utilizes laser light or the like, a vacuum deposition method that utilizes a mask, a sputtering method, a lift-off method, a printing method, or the like.

The surface resistivity of the conductive layer is preferably 1,000 $\Omega$/square or less, and more preferably 200 $\Omega$/square or less.

The thickness of the conductive layer is normally 10 nm to 9 $\mu$m, and preferably 20 nm to 1.0 $\mu$m.

The water vapor transmission rate of the gas barrier film laminate according to one embodiment of the invention at a temperature of 40°C and a relative humidity of 90% is normally 0.1 g/m$^2$/day or less, preferably 0.01 g/m$^2$/day or less, and more preferably 0.001 g/m$^2$/day or less.

The lower limit of the water vapor transmission rate of the gas barrier film laminate is not particularly limited, and is preferably as low as possible. The lower limit of the water vapor transmission rate of the gas barrier film laminate at a temperature of 40°C and a relative humidity of 90% is normally 0.00001 g/m$^2$/day or more.

The water vapor transmission rate of the gas barrier film laminate may be measured using a known gas transmission rate measurement apparatus.

The gas barrier film laminate according to one embodiment of the invention exhibits an excellent gas barrier capability, and rarely shows a deterioration in external appearance (e.g., due to occurrence of air bubbles) even when allowed to stand at a high temperature and a high humidity for a long time. The gas barrier film laminate according to one embodiment of the invention having the above properties is suitably used as a member for an electronic device (e.g., an optical filter, a flexible resin substrate used for a display (e.g., touch panel, liquid crystal display, and electronic paper), and a sealing film used for a photoelectric conversion device (e.g., organic EL device and solar cell)).

2) Method for producing gas barrier film laminate

A method for producing a gas barrier film laminate according to one embodiment of the invention includes bonding two gas barrier films that are situated adjacent to each other through an adhesive composition layer that is formed using an energy ray-curable adhesive composition, and curing the adhesive composition layer by applying energy rays to the adhesive composition layer.

Examples of the gas barrier film, the adhesive composition, and the method for forming the adhesive composition layer include those mentioned above (see "1) Gas barrier film laminate").

The gas barrier films that are situated adjacent to each other may be bonded through the adhesive composition layer using a method that forms the adhesive composition layer on a release sheet, bonds one of the gas barrier films to the adhesive composition layer, removes the release sheet, and bonds the other gas barrier film to the exposed surface of the adhesive composition layer.

The adhesive composition layer is then cured by applying the energy rays to the adhesive composition layer. Specifically, the adhesive composition layer is cured by applying the energy rays to the adhesive composition layer through one of the gas barrier films included in the laminate in which the gas barrier films that are situated adjacent to each other are bonded through the adhesive composition layer.

Ultraviolet rays, electron beams, or the like are normally used as the energy rays.

Ultraviolet rays may be applied using a high-pressure mercury lamp, an electrodeless lamp, a xenon lamp, or the like. The intensity is normally set to 50 to 1,000 mW/cm$^2$, and the dose is normally set to 100 to 500 mJ/cm$^2$, and preferably 50 to 300 mJ/cm$^2$.

The irradiation time is normally set to 0.1 to 1000 seconds, preferably 1 to 500 seconds, and more preferably 10 to 100 seconds. Ultraviolet rays may be applied a plurality of times so that the dose falls within the above range taking account of the thermal load during the ultraviolet irradiation step.

Electron beams may be applied using an electron beam accelerator or the like. The intensity is normally set to 10 to 1,000 krad, and the dose is normally set to about 10 to 1,000 krad.

Since the method for producing a gas barrier film laminate according to one embodiment of the invention bonds two gas barrier films that are situated adjacent to each other through the adhesive composition layer that is formed using the energy ray-curable adhesive composition in a state in which the adhesive layer is not cured and exhibits high adhesion, and then cures the adhesive composition layer by applying the energy rays to the adhesive composition layer, it is possible to reliably and firmly bond and secure the gas barrier films, and efficiently and easily produce a gas barrier film laminate that exhibits an excellent gas barrier capability, and rarely shows a deterioration in external appearance (e.g., due to occurrence of air bubbles) even when allowed to stand at a high temperature and a high humidity for a long time.

3) Electronic device

An electronic device according to one embodiment of the invention includes the gas barrier film laminate according to one embodiment of the invention.

Examples of the electronic device include, but are not limited to, a touch panel, a liquid crystal display, electronic paper, an organic EL display, a solar cell, and the like.

Since the gas barrier film laminate according to one embodiment of the invention exhibits an excellent gas barrier capability, and rarely shows a deterioration in external appearance (e.g., due to occurrence of air bubbles) even when allowed to stand at a high temperature and a high humidity for a long time, the gas barrier film laminate is suitable as a sealing film used for an electronic device such as an organic EL device.

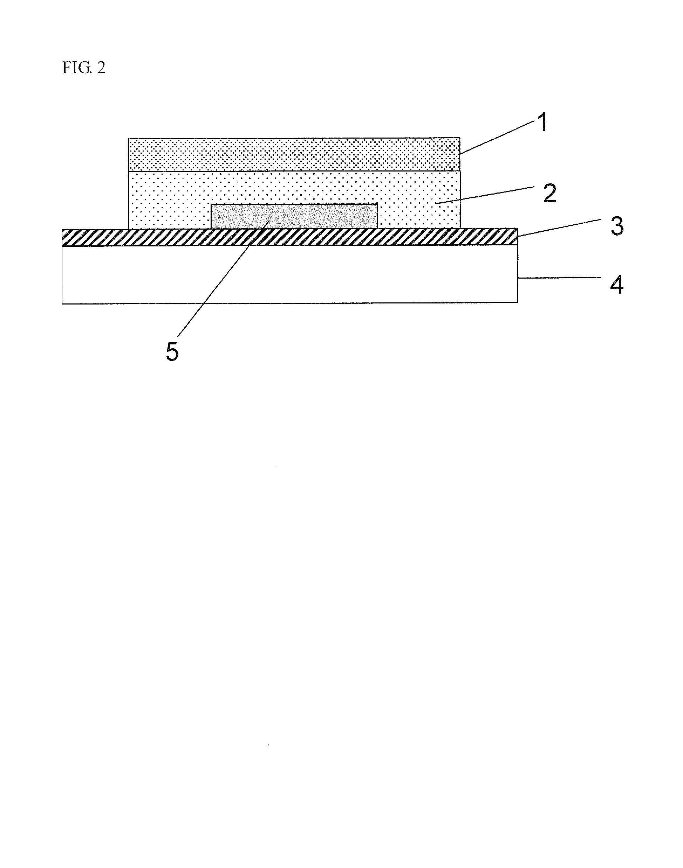

FIG. 2 illustrates an organic EL device that is an example of the electronic device according to one embodiment of the invention. Note that the electronic device according to one embodiment of the invention is not limited thereto.

As illustrated in FIG. 2, the organic EL device includes a transparent electrode 3 that is formed on a substrate 4, an organic EL element (e.g., hole-transporting layer, emitting layer, and bottom electrode) 5 that is stacked on the transparent electrode 3, a sealing material 2 that seals the organic EL element 5, and a gas barrier film laminate 1 that is stacked on the sealing material 2. The gas barrier film laminate 1 is bonded to the sealing material 2. Note that the gas barrier film laminate according to one embodiment of the invention may also be used as the substrate 4.

Since the organic EL device illustrated in FIG. 2 includes the gas barrier film laminate according to one embodiment of the invention as a sealing film for sealing the organic EL element, water does not enter the organic EL element, the sealing film rarely shows a deterioration in external appearance even when the organic EL device is allowed to stand at a high temperature and a high humidity for a long time, and a situation in which the emission characteristics of the organic EL element are impaired is suppressed.

EXAMPLES

The invention is further described below by way of examples. Note that the invention is not limited to the following examples.

The details of the plasma ion implantation apparatus and the plasma ion implantation conditions used when forming the gas barrier layer are as follows.

Plasma ion implantation apparatus

RF power supply: "RF56000" manufactured by JEOL Ltd.
High-voltage pulse power supply: "PV-3-HSHV-0835" manufactured by Kurita Seisakusho Co., Ltd.

Plasma ion implantation conditions

Plasma-generating gas: Ar
Gas flow rate: 100 sccm
Duty ratio: 0.5%
Applied voltage: -6 kV
RF power supply: frequency: 13.56 MHz, applied electric power: 1,000 W
Chamber internal pressure: 0.2 Pa
Pulse width: 5 $\mu$sec
Treatment time (ion implantation time): 200 sec

The following materials were used in the production examples and the examples.

(1) Base film

PET film: polyethylene terephthalate film ("PET38 T-100" manufactured by Mitsubishi Plastics Inc., thickness: 38 $\mu$m)

(2) Polysilazane compound

Polysilazane compound-containing liquid A: coating material including perhydropolysilazane as the main component ("Aquamika NL110-20" manufactured by Clariant Japan K.K.)

(3) Photoinitiator

Photoinitiator A: "Irgacure 500" manufactured by Ciba Specialty Chemicals Co., Ltd. Photoinitiator B: "Irgacure 184" manufactured by Ciba Specialty Chemicals Co., Ltd. Photoinitiator C: "Irgacure 500" manufactured by Ciba Specialty Chemicals Co., Ltd.

(4) Energy ray-curable compound

Energy ray-curable compound A: energy ray-curable polyfunctional monomer ("Aronix M-315" manufactured by Toagosei Co., Ltd.)
Energy ray-curable compound B: composition including energy ray-curable polyfunctional monomer and oligomer ("Seika-Beam 14-29B (NPI)" manufactured by Dainichiseika Colour & Chemicals Mfg. Co., Ltd.)

(5) Crosslinking agent

Crosslinking agent A: polyisocyanate-based crosslinking agent ("Oribain BHS-8515" manufactured by Toyo Ink Mfg. Co., Ltd.)

(6) Release sheet

Release sheet A: release sheet in which a silicone release layer is provided on one side of a PET film ("SP-PET381031" manufactured by Lintec Corporation)

Production Example 1-1: Production of gas barrier film 1

The polysilazane compound-containing liquid A was spin-coated onto a PET film (base film), and heated at 120°C for 1 minute to form a polysilazane layer including perhydropolysilazane (thickness: 150 nm).
Argon (Ar) ions were implanted into the surface of the polysilazane layer under the above plasma ion implantation conditions using the plasma ion implantation apparatus to form a gas barrier layer to obtain a gas barrier film 1. The water vapor transmission rate of the gas barrier film 1 at a temperature of 40°C and a relative humidity of 90% was 0.02 g/m$^2$/day. Note that the water vapor transmission rate of the gas barrier film was measured using a gas transmission rate measurement apparatus ("PERMATRAN" manufactured by MOCON (U.S.A)).

Production Example 1-2: Production of gas barrier film 2

A silicon nitride gas barrier layer (thickness: 60 nm) was formed on a PET film (base film) using a sputtering method to obtain a gas barrier film 2. The water vapor transmission rate of the gas barrier film 2 at a temperature of 40°C and a relative humidity of 90% was 0.4 g/m$^2$/day.

Production Example 2-1: Preparation of energy ray-curable adhesive composition A

95 parts by mass of n-butyl acrylate and 5 parts by mass of acrylic acid were copolymerized in ethyl acetate to obtain a solution including a polymer that had a weight average molecular weight of 1,600,000 and did not exhibit energy ray-curability ("acrylate copolymer 1" in Table 1).
0.3 parts by mass of the photoinitiator A, 30 parts by mass of the energy ray-curable compound A, and 0.1 parts by mass of the crosslinking agent A were added to (dissolved in) the solution including the acrylate copolymer 1 (70 parts by mass on a solid basis), and the solid content in the resulting solution was adjusted to 30 mass% to obtain an energy ray-curable adhesive composition A.

Production Example 2-2: Preparation of energy ray-curable adhesive composition B

0.3 parts by mass of the photoinitiator A, 30 parts by mass of the energy ray-curable compound B, and 0.1 parts by mass of the crosslinking agent A were added to (dissolved in) the solution including the acrylate copolymer 1 (70 parts by mass on a solid basis) obtained in Production Example 2-1, and the solid content in the resulting solution was adjusted to 30 mass% to obtain an energy ray-curable adhesive composition B.

Production Example 2-3: Preparation of energy ray-curable adhesive composition C

80 parts by mass of n-butyl acrylate and 20 parts by mass of acrylic acid were copolymerized in an ethyl acetate-methyl ethyl ketone mixed solvent (mass ratio: 50:50) to obtain a solution (solid content: 35 mass%) including an acrylate copolymer 2 (i.e., a polymer that does not exhibit energy ray-curability) having a weight average molecular weight of 600,000.
0.3 parts by mass of the photoinitiator B, 30 parts by mass of the energy ray-curable compound B, and 0.2 parts by mass of the crosslinking agent A were added to (dissolved in) the solution including the acrylate copolymer 2 (70 parts by mass on a solid basis), and the solid content in the resulting solution was adjusted to 30 mass% to obtain an energy ray-curable adhesive composition C.

Production Example 2-4: Preparation of energy ray-curable adhesive composition D

0.3 parts by mass of the photoinitiator C, 30 parts by mass of the energy ray-curable compound A, and 0.2 parts by mass of the crosslinking agent A were added to (dissolved in) the solution including the acrylate copolymer 2 obtained in Production Example 2-3 (70 parts by mass on a solid basis), and the solid content in the resulting solution was adjusted to 30 mass% to obtain an energy ray-curable adhesive composition D.

Production Example 2-5: Preparation of energy ray-curable adhesive composition E

62 parts by mass of n-butyl acrylate, 10 parts by mass of methyl methacrylate, and 28 parts by mass of 2-hydroxyethyl acrylate (hereinafter referred to as "HEA") were copolymerized in methyl ethyl ketone to obtain a solution (solid content: 40 mass%) including an acrylate copolymer.
2-Methacryloyloxyethyl isocyanate (80 equivalents based on 100 equivalents of HEA in the copolymer) was added to the solution including the acrylate copolymer, and the mixture was subjected to graft polymerization at 40°C for 48 hours in a nitrogen atmosphere to obtain a solution including an energy ray-curable acrylic-based copolymer that had a weight average molecular weight of 250,000 and included a polymerizable unsaturated group in the side chain ("energy ray-curable unsaturated group-containing polymer A" in Table 1).
3 parts by mass of the photoinitiator B and 0.1 parts by mass of the crosslinking agent A were added to (dissolved in) the solution including the energy ray-curable acrylic-based copolymer (100 parts by mass on a solid basis), and the solid content in the resulting solution was adjusted to 30 mass% to obtain an energy ray-curable adhesive composition E.

Production Example 2-6: Preparation of energy ray-curable adhesive composition F

3 parts by mass of the photoinitiator B, 30 parts by mass of the acrylate copolymer obtained in Production Example 2-1, and 0.1 parts by mass of the crosslinking agent A were added to (dissolved in) the solution including the energy ray-curable acrylic-based copolymer obtained in Production Example 2-5 (70 parts by mass on a solid basis), and the solid content in the resulting solution was adjusted to 30 mass% to obtain an energy ray-curable adhesive composition F.

Production Example 2-7: Preparation of energy ray-curable adhesive composition G

3 parts by mass of the photo initiator A, 30 parts by mass of the energy ray-curable compound A, and 0.1 parts by mass of the crosslinking agent A were added to (dissolved in) the solution including the energy ray-curable acrylic-based copolymer obtained in Production Example 2-5 (70 parts by mass on a solid basis), and the solid content in the resulting solution was adjusted to 30 mass% to obtain an energy ray-curable adhesive composition G.

Production Example 2-8: Preparation of adhesive composition H

0.1 parts by mass of the crosslinking agent A was added to (dissolved in) the solution including the acrylate copolymer 1 obtained in Production Example 2-1 (100 parts by mass on a solid basis), and the solid content in the resulting solution was adjusted to 30 mass% to obtain an adhesive composition H.

Production Example 2-9: Preparation of adhesive composition I

0.2 parts by mass of the crosslinking agent A was added to (dissolved in) the solution including the acrylate copolymer 2 obtained in Production Example 2-3 (100 parts by mass on a solid basis), and the solid content in the resulting solution was adjusted to 30 mass% to obtain an adhesive composition I.

Production Example 2-10: Preparation of adhesive composition J

0.3 parts by mass of the photoinitiator A, 14 parts by mass of the energy ray-curable compound A, and 0.1 parts by mass of the crosslinking agent A were added to (dissolved in) the solution including the acrylate copolymer 1 obtained in Production Example 2-1 (86 parts by mass on a solid basis), and the solid content in the resulting solution was adjusted to 30 mass% to obtain an energy ray-curable adhesive composition J.

Example 1

The energy ray-curable adhesive composition A obtained in Production Example 2-1 was applied to the surface of the release layer of the release sheet A using a comma direct coating method, and the resulting film was dried at 100°C for 1 minute to form an adhesive composition layer having a thickness of about 10 $\mu$m.

The surface of the adhesive composition layer formed on the release sheet was bonded to the surface of the base of the gas barrier film 1 prepared in Production Example 1-1. The surface of the adhesive composition layer that was exposed by removing the release sheet was bonded to the surface of the base of another gas barrier film 1 to obtain a laminate having the layer configuration (c) illustrated in FIG. 1. When 30 seconds had elapsed, the adhesive composition layer was cured by applying ultraviolet (UV) rays to the adhesive composition layer through one of the gas barrier films at an intensity of 200 mW/cm$^2$ and a dose of 300 mJ/cm$^2$ using a high-pressure mercury lamp (manufactured by Eye Graphics Co., Ltd.) to produce a gas barrier film laminate 1.

The intensity and the dose were measured using a UV meter ("UVPF-36" manufactured by Eye Graphics Co., Ltd.).

Example 2

A gas barrier film laminate 2 was produced in the same manner as in Example 1, except that the energy ray-curable adhesive composition B obtained in Production Example 2-2 was used instead of the energy ray-curable adhesive composition A.

Example 3

A gas barrier film laminate 3 was produced in the same manner as in Example 1, except that the energy ray-curable adhesive composition C obtained in Production Example 2-3 was used instead of the energy ray-curable adhesive composition A.

Example 4

A gas barrier film laminate 4 was produced in the same manner as in Example 1, except that the energy ray-curable adhesive composition D obtained in Production Example 2-4 was used instead of the energy ray-curable adhesive composition A.

Example 5

A gas barrier film laminate 5 was produced in the same manner as in Example 1, except that the gas barrier film 2 obtained in Production Example 1-2 was used instead of the gas barrier film 1.

Example 6

A gas barrier film laminate 6 was produced in the same manner as in Example 1, except that the surface of the adhesive composition layer that was exposed by removing the release sheet was bonded to the surface of the gas barrier layer of another gas barrier film to obtain a laminate having the layer configuration (b) illustrated in FIG. 1.

Example 7

A gas barrier film laminate 7 was produced in the same manner as in Example 1, except that the energy ray-curable adhesive composition E obtained in Production Example 2-5 was used instead of the energy ray-curable adhesive composition A.

Example 8

A gas barrier film laminate 8 was produced in the same manner as in Example 1, except that the energy ray-curable adhesive composition F obtained in Production Example 2-6 was used instead of the energy ray-curable adhesive composition A.

Example 9

A gas barrier film laminate 9 was produced in the same manner as in Example 1, except that the energy ray-curable adhesive composition G obtained in Production Example 2-7 was used instead of the energy ray-curable adhesive composition A.

Comparative Example 1

A gas barrier film laminate 1r was produced in the same manner as in Example 1, except that the adhesive composition H obtained in Production Example 2-8 was used instead of the energy ray-curable adhesive composition A.

Comparative Example 2

A gas barrier film laminate 2r was produced in the same manner as in Example 1, except that the adhesive composition I obtained in Production Example 2-9 was used instead of the energy ray-curable adhesive composition A.

Comparative Example 3

A gas barrier film laminate 3r was produced in the same manner as in Example 5, except that the adhesive composition J was used instead of the energy ray-curable adhesive composition A.

Comparative Example 4

A gas barrier film laminate 4r was produced in the same manner as in Example 6, except that the adhesive composition H was used instead of the energy ray-curable adhesive composition A.

Measurement of storage modulus

The adhesive composition (adhesive compositions A to I) was applied to a release layer of a release sheet in which a silicone release layer was provided on one side of a PET film ("SP-PET381031" manufactured by Lintec Corporation) so that the thickness after drying was 25 $\mu$m, and the resulting film was dried to form an adhesive composition layer.

When the adhesive compositions A to G and J were used, ultraviolet (UV) rays were applied to the dried film (i.e., the adhesive composition layer provided with the release sheet) at an intensity of 200 mW/cm$^2$ and a dose of 300 mJ/cm$^2$ using a high-pressure mercury lamp (manufactured by Eye Graphics Co., Ltd.) to obtain an adhesive layer provided with a release sheet.

The resulting adhesive layers A to G and J were subjected to viscoelasticity measurement (frequency: 11 Hz, temperature range: 0 to 250°C, tensile mode) using a viscoelasticity measurement apparatus ("DMA Q800" manufactured by TA Instruments Japan Inc.). Tables 1 and 2 show the storage modulus measurement results (23°C and 60°C).

The adhesive composition layer of another adhesive composition layer provided with a release sheet (including the same adhesive layer) was stacked on the adhesive composition layer provided with a release sheet that was obtained using the adhesive composition H or I. The adhesive composition layer of still another adhesive composition layer provided with a release sheet (including the same adhesive layer) was cut to have dimensions of 120×120 mm, and stacked on the adhesive composition layer that had been exposed by removing the release sheet. This operation was repeated until the total thickness of the adhesive composition layer (laminate) was 3 mm. The laminate was stamped out in the shape of a column having a diameter of 8 mm to prepare adhesive composition layers H and I (specimens).

The resulting adhesive composition layers were subjected to viscoelasticity measurement (frequency: 1 Hz, temperature range: 25 to 220°C, torsional shear method) using a viscoelasticity measurement apparatus ("DYNAMIC ANALYZER RDA II" manufactured by TA Instruments Japan Inc.). Table 2 shows the storage modulus measurement results (23°C and 60°C).

Evaluation of external appearance at high temperature and high humidity

The gas barrier film laminates 1 to 9 obtained in Examples 1 to 9 and the gas barrier film laminates 1r to 3r obtained in Comparative Examples 1 to 4 were allowed to stand at a high temperature (60°C) and a high humidity (90%RH) for 1000 hours. Each gas barrier film laminate was then conditioned at a temperature of 23°C and a relative humidity of 50% for 1 day, and observed with the naked eye. The evaluation results are shown in Tables 1 and 2. In Tables 1 and 2, "a" (see the item "layer configuration") indicates that the laminate had the layer configuration (a) illustrated in FIG. 1, and "b" (see the item "layer configuration") indicates that the laminate had the layer configuration (b) illustrated in FIG. 1.

The gas barrier film laminate was evaluated in accordance with the following standard.

Good: No air bubbles were observed in the gas barrier film laminate.
Poor: Air bubbles were observed in the gas barrier film laminate.

TABLE 1

| | | | Example 1 | Example 2 | Example 3 | Example 4 | Example 5 | Example 6 | Example 7 | Example 8 | Example 9 |
|---|---|---|---|---|---|---|---|---|---|---|---|
| | Gas barrier film | | 1 | 1 | 1 | 1 | 2 | 1 | 1 | 1 | 1 |
| | Layer configuration | | a | a | a | a | a | b | a | a | a |
| Adhesive composition | | Type | A | B | C | D | A | A | E | F | G |
| | | Acrylate copolymer 1 | 70 | 70 | | | 70 | 70 | | 30 | |
| | | Acrylate copolymer 2 | | | 70 | 70 | | | | | |
| | | Energy ray-curable compound A | 30 | | 30 | | 30 | 30 | | | 30 |
| | | Energy ray-curable compound B | | 30 | | 30 | | | | | |
| | | Energy ray-curable unsaturated group-containing polymer A | | | | | | | 100 | 70 | 70 |
| | Storage modulus (Pa) at 23°C | | $8.2\times10^7$ | $7.4\times10^7$ | $1.1\times10^9$ | $8.1\times10^8$ | $8.2\times10^7$ | $8.2\times10^7$ | $5.3\times10^7$ | $4.4\times10^7$ | $1.7\times10^9$ |
| | Storage modulus (Pa) at 60°C | | $2.3\times10^7$ | $1.3\times10^7$ | $7.3\times10^8$ | $3.3\times10^8$ | $2.3\times10^7$ | $2.3\times10^7$ | $1.1\times10^7$ | $1.0\times10^7$ | $9.3\times10^8$ |
| | Evaluation of external appearance | | Good | Good | Good | Good | Good | Good | Good | Good | Good |

EP 2 957 425 A1

TABLE 2

| | | | Comparative Example 1 | Comparative Example 2 | Comparative Example 3 | Comparative Example 4 |
|---|---|---|---|---|---|---|
| Gas barrier film | | | 1 | 1 | 1 | 2 |
| Layer configuration | | | a | a | a | b |
| Adhesive composition | | Type | H | I | J | H |
| | | Acrylate copolymer 1 | 100 | | 86 | 100 |
| | | Acrylate copolymer 2 | | 100 | | |
| | | Energy ray-curable compound A | | | 14 | |
| | | Energy ray-curable compound B | | | | |
| | | Energy ray-curable unsaturated group-containing polymer A | | | | |
| Storage modulus (Pa) at 23°C | | | $1.9 \times 10^5$ | $2.2 \times 10^5$ | $1.9 \times 10^5$ | $1.9 \times 10^5$ |
| Storage modulus (Pa) at 60°C | | | $1.1 \times 10^5$ | $1.7 \times 10^5$ | $1.1 \times 10^5$ | $1.1 \times 10^5$ |
| Evaluation of external appearance | | | Poor | Poor | Poor | Poor |

As shown in Tables 1 and 2, while no air bubbles were observed in the gas barrier film laminates 1 to 9 obtained in Examples 1 to 9, air bubbles were observed in the gas barrier film laminates 1r to 4r obtained in Comparative Examples 1 to 4.

REFERENCE SIGNS LIST

A1, A2:    Gas barrier film

C:          Adhesive layer

a1, a2:    Base

b1, b2:    Gas barrier layer

1:          Gas barrier film laminate

2:          Sealing material

3:          Transparent electrode

4:          Substrate

5:          Organic EL element

**Claims**

1.  A gas barrier film laminate comprising at least two gas barrier films, the gas barrier film laminate having a structure in which two gas barrier films that are situated adjacent to each other are stacked through an adhesive layer, the adhesive layer being formed by curing an adhesive composition layer that is formed using an energy ray-curable adhesive composition by applying energy rays to the adhesive composition layer.

2. A gas barrier film laminate comprising at least two gas barrier films, the gas barrier film laminate being obtained by bonding two gas barrier films that are situated adjacent to each other through an adhesive composition layer that is formed using an energy ray-curable adhesive composition, and curing the adhesive composition layer by applying energy rays to the adhesive composition layer.

3. The gas barrier film laminate according to claim 1 or 2, wherein the adhesive layer has a storage modulus at 60°C of $1 \times 10^7$ to $1 \times 10^9$ Pa.

4. The gas barrier film according to claim 1 or 2, wherein the energy ray-curable adhesive composition comprises a mixture of a polymer that does not exhibit energy ray-curability and an energy ray-curable compound as a main component, or comprises a polymer that includes an energy ray-curable unsaturated group as a main component.

5. The gas barrier film laminate according to claim 4, wherein the polymer that does not exhibit energy ray-curability is a (meth)acrylate-based copolymer, and the polymer that includes an energy ray-curable unsaturated group is a (meth)acrylate copolymer that includes an energy ray-curable unsaturated group in a side chain.

6. The gas barrier film laminate according to claim 5, wherein the (meth)acrylate-based copolymer is a carboxyl group-containing (meth)acrylate-based copolymer.

7. The gas barrier film laminate according to claim 1 or 2, wherein the gas barrier film has a water vapor transmission rate at a temperature of 40°C and a relative humidity of 90% of 0.5 g/m$^2$/day or less.

8. The gas barrier film laminate according to claim 1 or 2, wherein the gas barrier film comprises a base that is formed of a synthetic resin, and at least one gas barrier layer that is provided on the base.

9. The gas barrier film laminate according to claim 8, wherein at least one of the two gas barrier films that are situated adjacent to each other is stacked so that the base comes in contact with the adhesive layer.

10. A method for producing the gas barrier film laminate according to any one of claims 1 to 9, the method comprising bonding two gas barrier films that are situated adjacent to each other through an adhesive composition layer that is formed using an energy ray-curable adhesive composition, and curing the adhesive composition layer by applying energy rays to the adhesive composition layer.

11. An electronic device comprising the gas barrier film laminate according to any one of claims 1 to 9.

FIG. 1

(a)

A1 { a1, b1
C
A2 { b2, a2

(b)

A1 { b1, a1
C
A2 { b2, a2

(c)

A1 { b1, a1
C
A2 { a2, b2

FIG. 2

**INTERNATIONAL SEARCH REPORT**

| | International application No. |
|---|---|
| | PCT/JP2014/053223 |

**A. CLASSIFICATION OF SUBJECT MATTER**
*B32B27/00*(2006.01)i

According to International Patent Classification (IPC) or to both national classification and IPC

**B. FIELDS SEARCHED**

Minimum documentation searched (classification system followed by classification symbols)
B32B1/00-43/00

Documentation searched other than minimum documentation to the extent that such documents are included in the fields searched
Jitsuyo Shinan Koho        1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-24519 A (Mitsui Toatsu Chemicals, Inc.), 27 January 1998 (27.01.1998), claims; paragraphs [0014], [0054] to [0056]; fig. 2, 3 (Family: none) | 1-3,7,8,10, 11 |
| X | JP 60-90752 A (Sekisui Chemical Co., Ltd.), 21 May 1985 (21.05.1985), page 1, lower right column; page 2, lower left column; page 3, example 1 (Family: none) | 1-3,7,8,10, 11 |

[×] Further documents are listed in the continuation of Box C.       [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 March, 2014 (17.03.14) | 25 March, 2014 (25.03.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/053223

C (Continuation).    DOCUMENTS CONSIDERED TO BE RELEVANT

| Category* | Citation of document, with indication, where appropriate, of the relevant passages | Relevant to claim No. |
|---|---|---|
| A | JP 3-108538 A  (M & FC Holding Co., Inc.), 08 May 1991 (08.05.1991), entire text & US 5080744 A            & US 5114792 A & EP 398312 A2            & DE 69028438 C & AU 5458890 A            & AT 142559 T & AU 630581 B | 1-11 |
| A | JP 2011-56775 A  (Fujifilm Corp.), 24 March 2011 (24.03.2011), entire text (Family: none) | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006327098 A

- WO 04101276 A